# EUROPEAN PATENT SPECIFICATION

(11) **EP 1 722 200 B1**
(45) Date of publication and mention of the grant of the patent: **13.02.2008**
(21) Application number: 05380095.9
(22) Date of filing: 13.05.2005
(51) Int. Cl.: G01D 5/347, G01D 5/38

(54) **Optoelectronic measuring device**
Optoelektronische Messeinrichtung
Dispositif de mesure optoelectronique

(43) Date of publication of application: 15.11.2006
(73) Proprietor: FAGOR, S.COOP., 20500 Mondragon (Gipuzkoa) (ES)
(72) Inventor: Calvo, Tomás Morlanes, 1011 Vitoria-Gasteiz (Alava) (ES); Martínez, Eusebio Bernabéu, 28036 Madrid (ES); Fernández, José Alonso, 28031 Madrid (ES)
(74) Representative: Fernandez Guzman, Juan

(56) References cited:
- EP-A- 0 543 513
- GB-A- 2 192 753
- US-A- 4 499 374
- US-A- 5 155 355

## Description

### TECHNICAL FIELD

The invention relates to optical measuring devices and more specifically to reflection-type optical measuring devices.

### PRIOR ART

Reflection-type optoelectronic measuring devices that comprise a graduated scale and a readhead, and also comprise a self-imaging process described, for example, in the article "Optical encoder based on the Lau effect", Optical engineering 39 (3), 817-824 (2000), are well known.

US4079252 discloses devices of this type wherein the readhead comprises at least one light emitter, a graticule and photodetector means. The light emitted by the light emitter is reflected on the graduated scale and reaches the photodetector means, thereby determining the relative position between the readhead and graduated scale in accordance with said light received by said photodetector means. Between the light emitter and the photodetector means is disposed a graticule through which light passes, with said graticule disposed between the graduated scale and the photodetector means.

EP543513A1 discloses a device wherein the light emitter and the photodetector means are disposed on a single substrate, said substrate being divided into a first region and a second region. The light emitter is disposed in the first region, whereas the photodetector means are disposed in the second region. The first region comprises a semiconductor material and a plurality of electrodes, said semiconductor material emitting light and said electrodes acting as a graticule.

US-A-4 499 374 discloses an optoelectronic measuring device which comprises a first and a second scales with optical grating relative to each other. The grating in one of the scales is constructed by layers of different materials laminated on a light transmitting base member. Said layers form a light receiving portion, a plurality of said portions being arranged at regular pitches.

US-A-5 155 355 discloses an optoelectronic measuring device that comprises a graduated scale and a readhead which can be displaced with respect to the graduated scale, the readhead measuring its relative position with respect to the graduated scale by reflection. The readhead comprises photodetector means, at least one first electrode, a second electrode, and a substrate disposed between the first and the second electrodes, such that the substrate operates as a light emitter. The first electrode is opaque, thus preventing the reflected light from passing through and acting as a graticule.

### DISCLOSURE OF THE INVENTION

The object of the invention is to provide an optoelectronic measuring device that improves certain characteristics in existing devices in the prior art.

The device of the invention comprises a graduated scale and a readhead that can move with respect to the graduated scale. Said readhead can measure its relative position with respect to said graduated scale by reflection.

The readhead comprises photodetector means, at least one first electrode, a second electrode and a substrate disposed between said first electrode and said second electrode. Due to the first electrode and the second electrode, the substrate can operate as a light emitter. For this reason, there is no need to use lamps or emitter diodes to emit light, thus enabling the size of the readhead to be reduced.

The second electrode is transparent and the substrate allows light to pass through in such a way that the reflected light passes through said substrate to the photodetector means. The first electrode, in contrast, is opaque and prevents said light from passing through. Subsequently, in addition to using said first electrode to allow said substrate to emit light, the first electrode operates as a graticule.

In the device of the invention, therefore, it is not necessary to add a graticule, thus enabling a more compact readhead to be created.

Furthermore, due to the fact that the substrate can emit light and also allow light to pass through, in the device of the invention a first region to emit light and a second region to detect the reflected light are not required as both functions can be combined in a single region. The fact that only a single region is needed to combine both functions also allows for a more compact readhead.

These and other advantages and characteristics of the invention will be made evident in the light of the drawings and the detailed description thereof.

### DESCRIPTION OF THE DRAWINGS

FIG. 1 is a first embodiment of the device according to the invention.
FIG. 2 is a view according to section II-II of the embodiment in FIG. 1.
FIG. 3 is a front view of the graduated scale of the of the device according to the invention.
FIG. 4 is a second embodiment of the of the device according to the invention.
FIG. 5 is a view according to section V-V of the embodiment in FIG. 4.

### DETAILED DESCRIPTION OF THE INVENTION

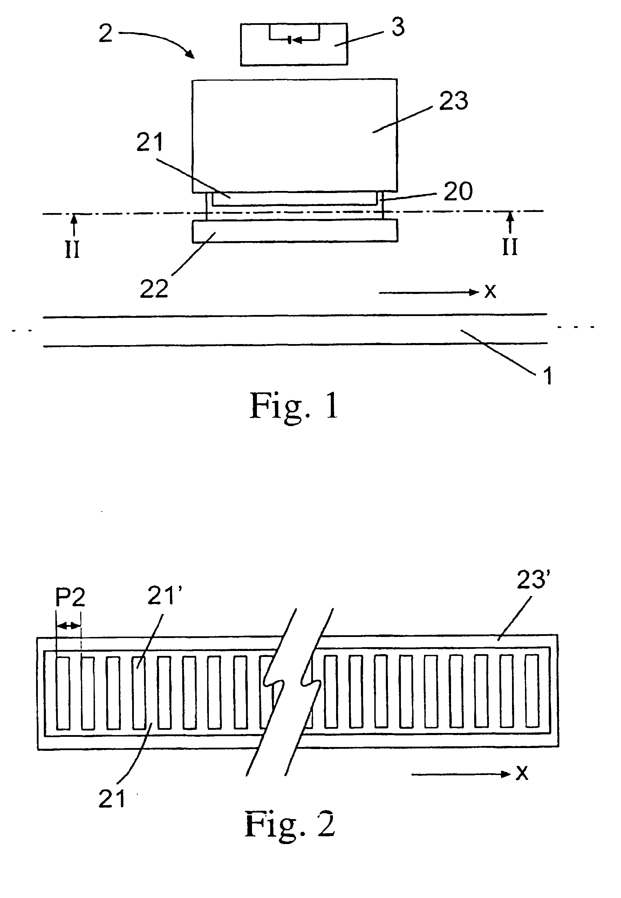

Figures 1 and 2 illustrate a first embodiment of the invention, showing an optoelectronic measuring device that comprises a graduated scale 1 and a readhead 2. The readhead 2 moves with respect to said graduated scale 1, and measures its relative position with respect to said graduated scale 1 by reflection.

The readhead 2 comprises photodetector means 3, a first electrode 21, a second electrode 22, and a substrate 20. The substrate 20 is disposed between the first electrode 21 and the second electrode 22, so that said second electrode 22 faces the graduated scale 1.

When a current is injected between said first electrode 21 and said second electrode 22, a flow of electrons is generated between both electrodes 21 and 22 so that the substrate 20 emits light that is reflected by the first electrode 21 towards the graduated scale 1, said substrate 20 operating as a light emitter. The light is emitted preferably in the contact areas between said first electrode 21 and said substrate 20, direct correspondence being established between the light emitter structure and the structure of said first electrode 21.

The second electrode 22 is transparent and can be made, for example, of Indium Tin Oxide (ITO). As said second electrode 22 is transparent, it allows the light emitted by the substrate 20 to pass through, so that said light reaches the graduated scale 1. Said graduated scale 1 comprises a plurality of opaque lines 1' distributed in a direction X, and these opaque lines 1' can be made, for example, of Chrome. Part of the light is reflected on said opaque lines 1', the light reflected on said opaque lines 1' passing through said second electrode 22.

The substrate 20 is compound of organic light-emitting material (OLED - organic light emitting diode). Said material is transparent, so apart from emitting light, said substrate 20 allows light to pass through. Subsequently, once it has passed through the second electrode 22, the light reflected on the opaque lines 1' of the graduated scale 1 passes to the photodetector means 3 through said substrate 20.

The first electrode 21 is metallic and opaque and can be made, for example, of Chrome. As it is opaque, said first electrode 21 prevents light from passing through, obstructing part of the light reflected on the opaque lines 1' of the graduated scale 1 from passing through, reaching the photodetector means 3 only the part of said reflected light not obstructed by said first electrode 21.

The first electrode 21 comprises a plurality of grooves 21' distributed in the direction X with a period P2, as shown in figure 2. When the substrate 20 emits light through the zones in contact with said first electrode 21, it does not emit light through the grooves 21' and operates as a structured light emitter. Similarly, as they are not opaque, light is able to pass through said grooves 21', said first electrode 21 operating as a graticule.

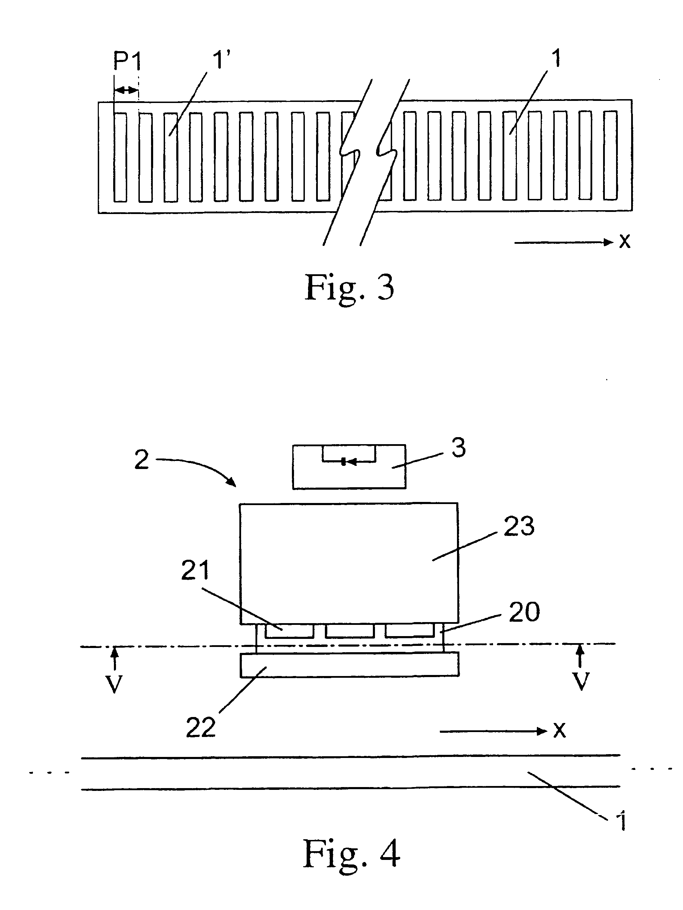

The opaque lines 1' on the graduated scale 1 are distributed in the direction X with a period P1, as shown in figure 3. The periods P1 and P2 can be equal or different. If said periods P1 and P2 are equal, a uniform field of light falls on the photodetector means 3, the intensity of which is modulated by the relative displacement between the graduated scale 1 and the readhead 2. If said periods P1 and P2 are different, the field of light on the photodetector means 3 consists of strips of light formed by a generalised self-imaging process.

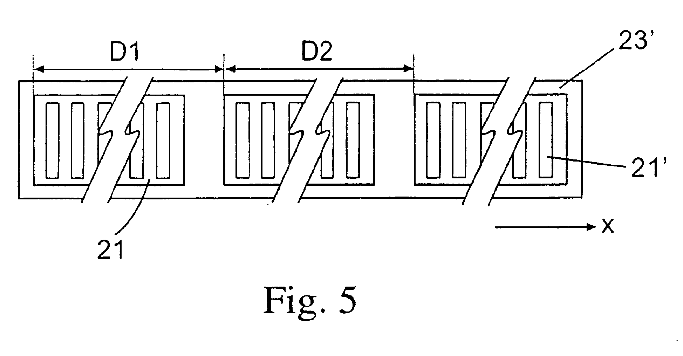

In a second embodiment the device of the invention comprises a plurality of electrodes 21, each electrode 21 comprising a plurality of grooves 21'. Figures 4 and 5 show an embodiment wherein said device comprises three electrodes 21, although two or more than three electrodes can also be used. The three electrodes 21 are separated by distances D1 and D2.

The photodetector means 3 may comprise, for example, a plurality of photodiodes not represented in the figures. Said photodiodes transform the reflected light received in electrical signals, generating an electrical signal for each of the electrodes 21. The distances D1 and D2 are directly related to the phase shift between the different electrical signals generated, which means that said distances D1 and D2 are determined in accordance with the phase shift required between said generated electrical signals. Said distances D1 and D2 can be equal or different.

The readhead 2 also comprises a support part 23 upon which the first electrode 21 is disposed, as shown in figures 1 and 4. The substrate 20 is disposed between the support part 23 and the second electrode 22. The support part 23 comprises a surface 23' that faces said second electrode 22, the first electrode 21 being disposed on said surface 23'. Once the first electrode 21 has been disposed on said surface 23', said surface 23' is impregnated with the substrate 20, the second electrode 21 being also impregnated with said substrate 20.

The support part 23 is made of glass and therefore allows light to pass through it. As the photodetector means 3 are disposed on the support part 23, the light reflected on the opaque lines 1' of the graduated scale 1 that reaches said photodetector means 3 passes through said support part 23 after passing through the substrate 20.

## Claims

1. Optoelectronic measuring device that comprises
a graduated scale (1) and a readhead (2) that can be displaced with respect to said graduated scale (1), said readhead (2) measuring its relative position with respect to said graduated scale (1) by reflection,
the readhead (2) comprising photodetector means (3), at least one first electrode (21), a second electrode (22), and a substrate (20) disposed between said first electrode (21) and said second electrode (22), so that said substrate (20) operates as a light emitter, the first electrode (21) being opaque thus preventing the reflected light from passing through and acting as a graticule, **characterised in that** the second electrode (22) is transparent, the substrate (20) allowing the reflected light to pass through to the photodetector means (3).

2. Optoelectronic measuring device according to claim 1, wherein the substrate (20) is composed of an organic material.

3. Optoelectronic measuring device according to any of the preceding claims, wherein the graduated scale (1) comprises a plurality of opaque lines (1') with a period (P1), and the first electrode (21) comprises a plurality of grooves (21') distributed along said first electrode (21) with a period (P2), the period (P1) being equal to the period (P2).

4. Optoelectronic measuring device according to either claim 1 or 2, wherein the graduated scale (1) comprises a plurality of opaque lines (1') with a period (P1), and the first electrode (21) comprises a plurality of grooves (21') distributed along said first electrode (21) with a period (P2), the period (P2) being different to the period (P1).

5. Optoelectronic measuring device according to any of the preceding claims, wherein it comprises a plurality of electrodes (21).

6. Optoelectronic measuring device according to any of the preceding claims, wherein the first electrode is metallic.

7. Optoelectronic measuring device according to any of the preceding claims, wherein the readhead (2) comprises a support part (23), the first electrode (21) being disposed on said support part (23), and the second electrode (22) facing the graduated scale (1), with the substrate (20) being disposed between said support part (23) and said second electrode (22).

8. Optoelectronic measuring device according to the preceding claim, wherein the support part (23) is made of glass.

## Patentansprüche

1. Optoelektronisches Messgerät, umfassend
eine Teilstrichskala (1) und einen Lesekopf (2), der im Verhältnis zur Teilstrichskala (1) bewegt werden kann, wobei der Lesekopf (2) seine relative Lage zur Teilstrichskala (1) durch die Reflexion misst,
wobei der Lesekopf (2) eine Photodetektorvorrichtung (3), mindestens eine erste Elektrode (21), eine zweite Elektrode (22) und einen zwischen der ersten Elektrode (21) und der zweiten Elektrode (22) angeordneten Trägerkörper (20) umfasst, so dass der Trägerkörper (20) als Lichtsender fungiert, wobei die erste Elektrode (21) lichtundurchlässig ist und somit verhindert, dass das reflektierte Licht durch sie durchgeht und als Raster dient, **dadurch gekennzeichnet, dass** die zweite Elektrode (22) transparent ist und der Trägerkörper (20) das reflektierte Licht durch die Photodetektorvorrichtung (3) durchlässt.

2. Optoelektronisches Messgerät nach Anspruch 1, wobei der Trägerkörper (20) aus organischem Material besteht.

3. Optoelektronisches Messgerät nach einem der vorausgehenden Ansprüche, wobei die Teilstrichskala (1) mehrere lichtundurchlässige Linien (1') mit einer Periode (P1) und die erste Elektrode (21) mehrere entlang der ersten Elektrode (21) verteilte Rillen (21') mit einer Periode (P2) umfasst, wobei die Periode (P1) gleich der Periode (P2) ist.

4. Optoelektronisches Messgerät nach Anspruch 1 oder 2, wobei die Teilstrichskala (1) mehrere lichtundurchlässige Linien (1') mit einer Periode (P1) und die erste Elektrode (21) mehrere entlang der ersten Elektrode (21) verteilte Rillen (21') mit einer Periode (P2) umfasst, wobei die Periode (P2) von der Periode (P1) abweicht.

5. Optoelektronisches Messgerät nach einem der vorausgehenden Ansprüche, wobei es mehrere Elektroden (21) umfasst.

6. Optoelektronisches Messgerät nach einem der vorausgehenden Ansprüche, wobei die erste Elektrode metallen ist.

7. Optoelektronisches Messgerät nach einem der vorausgehenden Ansprüche, wobei der Lesekopf (2) eine Halterung (23) umfasst, die erste Elektrode (21) auf der Halterung (23) angeordnet ist und die zweite Elektrode (22) zur Teilstrichskala (1) gewendet ist, wobei der Trägerkörper (20) zwischen der Halterung (23) und der zweiten Elektrode (22) angeordnet ist.

8. Optoelektronisches Messgerät nach dem vorausgehenden Anspruch, wobei die Halterung (23) aus Glas gefertigt ist.

## Revendications

1. Appareil de mesure opto-électronique qui comprend une échelle graduée (1) et une tête de lecture (2) qui peut se déplacer par rapport à ladite échelle graduée (1), ladite tête de lecture (2) étant capable de mesurer sa position relative par rapport à ladite échelle graduée (1) par réflexion,
la tête de lecture (2) comprend un photodétecteur (3), au moins une première électrode (21), une deuxième électrode (22) et un substrat (20) placé entre ladite première électrode (21) et ladite seconde électrode (22) de telle manière que ledit substrat (20) agisse en qualité d'émetteur de lumière, le premier électrode (21) étant opaque ce qui empêche la lumière réfléchie de la traverser et d'agir comme un graticule, **caractérisée en ce que** la seconde électrode (22) est transparente, le substrat (20) permettant à la lumière réfléchie de passer au travers pour atteindre le photodétecteur (3).

2. Un appareil de mesure opto-électronique selon la revendication 1, où le substrat (20) se compose d'une matière organique.

3. Appareil de mesure opto-électronique selon l'une quelconque des revendications précédentes, dans lequel l'échelle graduée (1) comprend une pluralité de lignes opaques (1') avec une période (P1) et la première électrode (21) comprend une pluralité de rainures (21') distribuées le long de ladite première électrode (21) avec une période (P2), la période (P1) étant égale à la période (P2).

4. Appareil de mesure opto-électronique selon l'une quelconque des revendications 1 ou 2, dans lequel l'échelle graduée (1) comprend une pluralité de lignes opaques (1') avec une période (P1) et la première électrode (21) comprend une pluralité de rainures (21') distribuées le long de ladite première électrode (21) avec une période (P2), la période (P2) étant différente de la période (P1).

5. Appareil de mesure opto-électronique selon l'une quelconque des revendications précédentes, qui comprend une pluralité d'électrodes (21).

6. Appareil de mesure opto-électronique selon l'une quelconque des revendications précédentes, dans lequel la première électrode est métallique.

7. Appareil de mesure opto-électronique selon l'une quelconque des revendications précédentes, dans lequel la tête de lecture (2) comprend une pièce de support (23), la première électrode (21) étant disposée sur ladite pièce de support (23) et la seconde électrode (22) se trouvant face à l'échelle graduée (1), avec le substrat (20) situé entre ladite pièce de support (23) et ladite seconde électrode (22).

8. Appareil de mesure opto-électronique selon la revendication précédente, dans lequel la pièce de support (23) est en verre.
